# EUROPEAN PATENT APPLICATION

(11) **EP 2 559 712 A1**
(43) Date of publication of application: **20.02.2013**
(21) Application number: 11768929.9
(22) Date of filing: 14.04.2011
(51) Int. Cl.: C08F 8/00, C08F 210/02, C08F 214/26

(54) **METHOD FOR REACTING ETHYLENE/TERAFLUOROETHYLENE COPOLYMER HAVING FUNCTIONAL GROUP**

(30) Priority: 16.04.2010 JP 2010094733
(71) Applicant: Asahi Glass Company, Limited, Tokyo 100-8405 (JP)
(72) Inventor: WADA, Shinji, Tokyo 100-8405 (JP); AIDA, Shigeru, Tokyo 100-8405 (JP); SHIROTA, Naoko, Tokyo 100-8405 (JP); NAKANO, Takashi, Tokyo 100-8405 (JP)
(74) Representative: Müller-Boré & Partner Patentanwälte
(86) International application number: PCT/JP2011/059302
(87) International publication number: WO 2011/129408

(57) **Abstract**

Provided is a method for efficiently and homogeneously reacting an ETFE having a functional group and a compound having a reactive functional group which can react with the functional group.

A method for reacting an ethylene/tetrafluoroethylene copolymer having a functional group, which comprises reacting, in the presence of a solvent which can dissolve the ethylene/tetrafluoroethylene copolymer having a functional group, the ethylene/tetrafluoroethylene copolymer having a functional group and a compound (A) having a reactive functional group which can react with the functional group, in a dissolved state.

## Description

### TECHNICAL FIELD

The present invention relates to a method for reacting an ethylene/tetrafluoroethylene copolymer having a functional group and a compound having a reactive functional group which can react with the functional group.

### BACKGROUND ART

An ethylene/tetrafluoroethylene copolymer (hereinafter, tetrafluoroethylene will sometimes be referred to as TFE, ethylene as E, and an ethylene/tetrafluoroethylene copolymer as ETFE) has characteristics excellent in e.g. heat resistance, chemical resistance, water resistance, oil resistance, weather resistance, aging resistance, gas barrier properties, fuel barrier properties, release properties, non-stickiness, antifouling properties, dye adhesion resistance and unelution properties, and is employed in various fields such as semiconductor industries, aircraft or automobile industries, food manufacturing industries and medical industries.

It has been reported that a carbonyl group is introduced into ETFE to impart an adhesive property to ETFE. For example, a method wherein a compound having a carbonyl group is used as an initiator to introduce the carbonyl group into the polymer terminals of ETFE, and a method wherein a monomer having a carbonyl group is copolymerized to introduce the carbonyl group into the side chains of ETFE, have been known (Patent Documents 1 and 2).

Further, modification of ETFE by reacting an ETFE having a carbonyl group with a compound which can react with the carbonyl group has been attempted. As a specific example, there is a reaction wherein ETFE particles having maleic anhydride grafted on their surfaces by irradiation are crosslinked by mixing them with paraphenylene diamine in acetone (Patent Document 3). However, ETFE does not dissolve in acetone by such a method, whereby the reaction only proceeds at a portion where the carbonyl group on the surface of ETFE particles and paraphenylene diamine are contacted. Therefore, there has been a problem such that the reaction proceeds heterogeneously with low efficiency.

To modify the ETFE having a functional group efficiently and homogeneously by using a compound which can react with the functional group contained in the ETFE, it is important to increase flowability of the molecular chain of ETFE and then bring the functional group in the ETFE into contact with the compound efficiently and homogeneously. As such a method, a method wherein ETFE is heated to a temperature of its melting point or higher to increase its flowability, and then a compound which can react with the functional group in the ETFE is mixed therewith for reaction may be mentioned. However, since the melting point of ETFE is a high temperature, a special installation is required for the reaction process. Further, since compounds having a low boiling point tend to be volatilized, there has been a problem such that selection of a compound for modification is limited.

As mentioned above, heretofore, a method of modifying an ETFE having a functional group, without requiring any special installation and limitation of a compound, by reacting the ETFE with a compound efficiently and homogeneously has not been known. When these problems are solved, it becomes possible to produce an ETFE having various characteristics by a convenient and efficient process.

There are a lot of reports on changing the properties of ETFE by modifying ETFE. For example, ETFE has a property such as a poor bonding or adhesion to other substrates due to its low affinity to other compounds, based on the characteristics of a fluorine atom bonded to its main chain. However, by introducing a functional group such as a hydroxy group, an amino group, a cyano group, a carbonyl group, an epoxy group or a hydrolysable silyl group, such a property may be improved (Patent Documents 4 and 5).

Further, although ETFE is hardly soluble in a solvent, its solubility may be improved by introducing a functional group such as a sulfonic acid salt (Patent Document 6).

Further, it has been reported that a crosslinked ETFE can be obtained by introducing a functional group such as a glycidyl group, a thiol group, an amido group or an active halogen group like bromine, iodine, etc., and reacting it with a crosslinking agent (Patent Document 7). In addition, improvement in flexibility, improvement in abrasion resistance, impartment of hydrophilicity, improvement in heat resistance, impartment of electrical characteristics, improvement in molding processability, etc. are expected.

By improving such properties, it may be possible to broaden the application of ETFE to fields where ETFE has not been used, e.g. to fields of an ionic exchange membrane, a dye, a hydrophilic porous membrane, an electret material and a catalyst supported membrane, and of course to attain performance improvement in fields where ETFE has been used. As described above, by modifying ETFE to change its properties, it becomes possible to use it for more various applications.

However, a method of modifying ETFE efficiently and homogeneously without requiring any special installation and limitation of a compound, for introduction of those functional groups, has not been known.

### PRIOR ART DOCUMENTS

### PATENT DOCUMENTS

- Patent Document 1:: JP-A-2004-277689
- Patent Document 2:: WO01/058686
- Patent Document 3:: JP-A-2000-34382
- Patent Document 4:: JP-A-10-311461
- Patent Document 5:: JP-A-2007-185822
- Patent Document 6:: JP-A-2001-270917
- Patent Document 7:: JP-A-11-315121

### DISCLOSURE OF INVENTION

### TECHNICAL PROBLEM

It is an object of the present invention to provide a method for efficiently and homogeneously reacting an ETFE having a functional group and a compound having a reactive functional group which can react with the functional group, in a dissolved state.

### SOLUTION TO PROBLEM

The present invention provides a method for reacting an ETFE having a functional group, which has the following constructions.
[1] A method for reacting an ETFE having a functional group, which comprises reacting, in the presence of a solvent which can dissolve the ETFE having a functional group, the ETFE having a functional group and a compound (A) having a reactive functional group which can react with the functional group, in a dissolved state.
[2] The method for reacting an ETFE having a functional group according to the above [1], wherein the functional group in the ETFE is a carbonyl group.
[3] The method for reacting an ETFE having a functional group according to the above [1] or [2], wherein the reactive functional group in the compound (A) is at least one member selected from the group consisting of an amino group, a hydroxy group, and a mercapto group.
[4] The method for reacting an ETFE having a functional group according to any one of the above [1] to [3], wherein the solvent is at least one member selected from the group consisting of a fluorinated aromatic compound, an aliphatic compound having at least one carbonyl group, and a hydrofluoroalkyl ether.
[5] The method for reacting an ETFE having a functional group according to any one of the above [1] to [4], wherein the reaction is carried out at a temperature of from 40 to 230°C.
[6] The method for reacting an ETFE having a functional group according to any one of the above [1] to [5], wherein the content of the ETFE is from 0.1 to 80 parts by mass per 100 parts by mass of the solvent.
[7] The method for reacting an ETFE having a functional group according to any one of the above [1] to [6], wherein the content of the functional group in the ETFE is from 10 to 3,000 equivalents/10⁶ g.
[8] The method for reacting an ETFE having a functional group according to any one of the above [2] to [7], wherein the carbonyl group in the ETFE is at least one member selected from the group consisting of a carboxy group, an alkoxycarbonyl group, a halogeno-carbonyl group, a carbonate group, an acid anhydride residue, an aldehyde group, a ketone group, and an isocyanate group.
[9] The method for reacting an ETFE having a functional group according to any one of the above [1] to [8], wherein the ETFE contains repeating units derived from tetrafluoroethylene and repeating units derived from ethylene, and the molar ratio thereof is from 70/30 to 30/70.
[10] The method for reacting an ETFE having a functional group according to any one of the above [1] to [9], wherein the compound (A) has at least two reactive functional groups.
[11] The method for reacting an ETFE having a functional group according to any one of the above [1] to [9], wherein the compound (A) is at least one member selected from the group consisting of an alkylamine, a haloamine, an aromatic amine, a silylamine, an alkyl alcohol, a haloalcohol, an aromatic alcohol, a silyl alcohol, a diamine, a diol, and an amino alcohol.
[12] The method for reacting an ETFE having a functional group according to any one of the above [1] to [11], wherein the ETFE further contains repeating units derived from another monomer, and such another monomer is a compound represented by CH₂=CX(CF₂)ₙY (provided that each of X and Y is independently a hydrogen atom or a fluorine atom, and n is an integer of from 2 to 8), and the content of the repeating units derived from another monomer is from 0.1 to 10 mol% based on the total repeating units.
[13] The method for reacting an ETFE having a functional group according to any one of the above [1] to [12], wherein the ETFE further contains repeating units derived from a polymerizable compound having an unsaturated bond and an acid anhydride residue.

### ADVANTAGEOUS EFFECTS OF INVENTION

According to the reaction method of the present invention, at the time of reacting an ETFE having a functional group with a compound having a reactive functional group which can react with the functional group, it is possible to react the entire functional group of the ETFE having a functional group efficiently and homogeneously in a dissolved state. Further, it is possible to react the functional group at any optional proportion. Further, it is possible to introduce a functional group which could have not been introduced into ETFE. As a result, the properties of thus obtained ETFE can be changed optionally, and it is thereby possible to use it for more various applications.

### DESCRIPTION OF EMBODIMENTS

In the present invention, the molar ratio of repeating units derived from tetrafluoroethylene and repeating units derived from ethylene in an ETFE copolymer having a functional group (hereinafter referred to as a functional group-containing ETFE) is preferably from 70/30 to 30/70, more preferably from 65/35 to 35/65, most preferably from 60/40 to 40/60.

The functional group may be a carbonyl group, a hydroxy group, an amino group, a mercapto group, a sulfonyl group, an isocyanate group, a cyano group, a halogeno group, a vinyl group, an epoxy group, a silyl group or the like.

The carbonyl group contained in the functional group-containing ETFE is preferably a carboxy group, an alkoxycarbonyl group, a halogeno-carbonyl group, a carbonate group, an acid anhydride residue, an aldehyde group, a ketone group or the like, and is most preferably an acid anhydride residue. Here, the acid anhydride residue has a structure represented by the general formula of R¹-C(=O)-O-C(=O)-R², and R¹ and R² may form a ring together. Further, both carbon atoms of the acid anhydride may be connected to the main chain of ETFE, or either one of them may be connected thereto. The halogeno-carbonyl group has a structure represented by the general formula of -C(=O)-X, and X is halogen. For example, -C(=O)-F or -C(=O)-Cl may specifically be mentioned. Such carbonyl groups may exist in the side chain of ETFE or the terminals of ETFE.

The method for producing the functional group-containing ETFE, a method of copolymerizing a monomer having a functional group with a monomer such as ethylene or tetrafluoroethylene. The monomer having a functional group may, for example, be a monomer having a carbonyl group, a monomer having a hydroxy group, a monomer having an amino group, a monomer having a mercapto group, a monomer having a sulfonyl group, a monomer having an isocyanate group, a monomer having a cyano group, a monomer having a halogeno group, a monomer having a vinyl group, a monomer having an epoxy group, or a monomer having a silyl group.

The monomer having a functional group may be used alone or in combination as a mixture of two or more of them. The monomer having a carbonyl group may, for example, be an unsaturated polycarboxylic acid anhydride such as itaconic anhydride, citraconic anhydride, bicyclo[2.2.1]hepto-2-en-5-5,6-dicarboxylic acid anhydride or maleic anhydride; an unsaturated carboxylic acid monomer such as acrylic acid, methacrylic acid, maleic acid, maleic acid monomethyl ester, fumaric acid, itaconic acid, citraconic acid, crotonic acid or bicyclo[2.2.1]hepto-2,3-en-5,6-dicarboxylic acid; an unsaturated carboxylic acid ester monomer such as methyl acrylate, methyl methacrylate, dimethyl maleate, methyl fumarate, methyl methacrylate, diethyl citraconate, diethyl fumarate, dimethyl itaconate, diethyl citraconate, perfluoroacrylic acid fluoride, 1-fluoroacrylic acid fluoride, acrylic acid fluoride, acrylic acid chloride, 1-trifluoromethacrylic acid fluoride or perfluorobutenoic acid; an unsaturated aldehyde monomer such as acrolein or croton aldehyde; or vinylene carbonate. Itaconic anhydride, citraconic anhydride, bicyclo[2.2.1]hepto-2-en-5-5,6-dicarboxylic acid anhydride or maleic anhydride is particularly preferred.

As specific examples of the monomer having a functional group other than a carbonyl group, a monomer having a hydroxy group such as allyl alcohol, crotyl alcohol, 2-methyl allyl alcohol, methyl vinyl carbinol, 3-butene-1-ol or 2-vinyl oxyethanol; a monomer having an amino group such as allylamine; a monomer having a mercapto group such as allyl mercaptan; a monomer having a sulfonyl group such as sodium vinyl sulfonate, sodium allyl sulfonate or sodium 2-methyl-2-propene-1-sulfonate; a monomer having a cyano group such as acrylonitrile, methacrylonitrile, allyl cyanide, 4-pentenenitrile, 3-pentenenitrile, 2-methyl-3-butenenitrile or 2,4-dicyano-1-butene; a monomer having a halogeno group such as allyl chloride, 3-chloro-2-methyl-1-propene, 1,3-dichloropropene, 3-chloro-1-butene, allyl bromide, 1-bromo-2-butene, 2,3-dibromopropene, 4-bromo-1-butene, 3-iodopropylene or 2-chloroethyl vinyl ether; a monomer having a vinyl group such as 1,3-butadiene, 1,4-pentadiene, 1,5-hexadiene, isoprene, 2-methyl-1,4-pentadiene, 1,3-pentadiene or 2-methyl-1,5-hexadiene; a monomer having an epoxy group such as vinyl ethylene oxide, 1,2-epoxy-5-hexene, allyl glycidyl ether or glycidyl methacrylate; and a monomer having a silyl group such as vinyl trimethylsilane, chlorodimethyl vinylsilane, allyl trimethylsilane, allyl chlorodimethylsilane, allyl trichlorosilane, allyl oxytrimethylsilane, vinyl trimethoxysilane, vinyl triethoxysilane, allyl trimethoxysilane, allyl triethoxysilane, dimethyl ethoxyvinylsilane or 5-triethoxysilyl-2-norbornene; may, for example, be mentioned.

Further, the method for producing the functional group-containing ETFE is preferably a method of grafting a graft compound to ETFE. The bonding group of the graft compound is a group which enables ETFE to be grafted. The bonding group may, for example, be an unsaturated or saturated hydrocarbon group involved in association or addition of radicals, or an amino group or phenolic hydroxy group involved in a nucleophilic reaction. Further, it may be a group which is likely to generate radicals such as a peroxy group or an azo group. The bonding group is preferably a group having a carbon-carbon unsaturated bond (particularly an organic group having an α, β-unsaturated double bond at its terminals), a peroxy group or an amino group.

As specific examples of the graft compound, in a case of introducing a carbonyl group, a polymerizable compound having an unsaturated bond and acid anhydride residue such as maleic anhydride, itaconic anhydride, citraconic anhydride or bicyclo[2.2.1]hepto-2-en-5-5,6-dicarboxylic acid anhydride; an unsaturated carboxylic acid such as acrylic acid, methacrylic acid, maleic acid, maleic acid monomethyl ester, fumaric acid, itaconic acid, citraconic acid, crotonic acid or bicyclo[2.2.1]hepto-23-en-5,6-dicarboxylic acid; an unsaturated carboxylic ester such as methyl acrylate, methyl methacrylate, dimethyl maleate, methyl fumarate, methyl methacrylate, diethyl citraconate, diethyl fumarate, dimethyl itaconate or diethyl citraconate; and an unsaturated aldehyde such as acrolein or crotonaldehyde; may, for example, be mentioned. The polymerizable compound having an unsaturated bond and acid anhydride residue such as maleic anhydride, itaconic anhydride, citraconic anhydride or bicyclo[2.2.1]hepto-2-en-5-5,6-dicarboxylic acid anhydride is particularly preferred.

Further, with regard to the method of grafting, a production method wherein a graft compound is added to ETFE, followed by melt-kneading at a temperature where radicals generate is disclosed in JP-A-7-173446. Further, in a case of introducing a functional group other than the carbonyl group, a monomer having a functional group other than the above-described carbonyl group may be mentioned.

Further, the method for producing the functional group-containing ETFE is preferably a method wherein peroxy carbonate or peroxy ester is used as a radical polymerization initiator for producing ETFE, or appropriately selecting a chain transfer agent, thereby to introduce a carbonyl group at the terminals of the polymer. The peroxy carbonate is preferably diisopropyl peroxy carbonate, di-n-propylperoxy carbonate, t-butyl peroxyisopropyl carbonate, bis(4-t-butylcyclohexyl)peroxy carbonate, di-2-ethylhexyl peroxy carbonate or the like.

The above-mentioned chain transfer agent may, for example, be acidic anhydride, propionic anhydride, butyric anhydride, isobutyric anhydride, hexahydrophthalic anhydride or hexahydro-4-methylphthalic anhydride. At least one member selected from the group consisting of acidic anhydride, propionic anhydride, butyric anhydride, isobutyric anhydride and hexahydrophthalic anhydride is particularly preferred. By the chain transfer reaction, usually, an acid anhydride residue is introduced at the main chain terminals of a fluorinated polymer.

The functional group-containing ETFE may be a copolymer wherein copolymerizable another monomer other than the above-described components, tetrafluoroethylene and ethylene, are copolymerized. Such another monomer may be a fluoroethylene such as CF₂=CFCl or CF₂=CH₂; a fluoropropylene such as CF₂ =CFCF₃ or CF₂ =CHCF₃; a (polyfluoroalkyl) ethylene such as a compound represented by CH₂ =CX(CF₂)ₙ Y such as CH₂=CHCF₂ CF₂ CF₂ CF₃ or CH₂ =CFCF₂ CF₂ CF₂ CF₃ (wherein each of X and Y which are independent of each other is a hydrogen or fluorine atom, and n is an integer of from 2 to 12, preferably an integer of from 2 to 8); a perfluorovinyl ether such as Rf(OCFXCF₂)mOCF=CF₂ (wherein Rf is a C₁₋₆ perfluoroalkyl group, X is a fluorine atom or trifluoromethyl group and m is an integer of from 1 to 5); CH₃ OC(=O)CF₂ CF₂ CF₂ OCF=CF₂, FSO₂ CF₂ CF₂ OCF(CF₃)CF₂ OCF=CF₂ or the like ; and they may be used alone or in combination as a mixture of two or more types of them. Further, they may be used in combination with e.g. a hydrocarbon olefin monomer having at most three carbon atoms such as propylene or isobutyrene; a vinly ester such as vinyl acetate; and a vinyl ether such as ethyl vinyl ether or cyclohexyl vinyl ether. Among such comonomers, a fluoropropylene or a perfluoroalkylethylene is preferred. The copolymerization ratio of such another monomer is usually preferably at most 20 mol%, particularly preferably from 0.1 to 10 mol%, based on the functional group-containing ETFE.

The content of the functional group conatined in the functional group-containing ETFE is preferably from 10 to 3,000 equivalents/10⁶ g, more preferably from 30 to 2,500 equivalents/10⁶ g, most preferably from 80 to 2,000 equivalents/10⁶ g. When it exceeds 3,000 equivalents/10⁶ g, the heat resistance, chemical resistance, etc. of the ETFE may be impaired.

In the present invention, the solvent which can dissolve the functional group-containing ETFE is a sovlent which can dissolve the functional group-containing ETFE at a temperature of the melting point of the functional group-containing ETFE or lower under atmospheric pressure or a pressurized condition. The solvent is preferably at least one member selected from the group consisting of a fluorinated aromatic compound, an aliphatic compuond having at least one carbonyl group, and a hydrofluoroalkyl ether. The sovlent may be one which cannot dissolve the functional group-containing ETFE at normal temperature, but is preferably at least one which can dissolve the functional group-containing ETFE by heating to a temperature of lower than the melting point of the functional group-containing ETFE, and provides a transparent and homogeneous solution of the functional group-containing ETFE.

Here, "dissolved state" in the present invention means a state wherein a mixture of a fluorinated copolymer and the solvent is transparent and homogeneous at a certain temperature, by visual evaluation after mixing them sufficiently.

Further, the solvent is a solvent which can dissolve a compound (A) having a reactive functional group which can react with the functional group of the functional group-contaning ETFE (hereinafter sometimes referred to as compound (A)). The solvent may be a solvent which also can dissolve the compound (A), among solvents which can dissolve the functional group-containing ETFE at a temperature of the melting point of the functional group-containing ETFE or lower. The sovlent is preferably a solvent which can dissolve at least 0.1 mass% of each of the functional group-containing ETFE and the compound (A) at a temperature of the melting point of the functional group-containing ETFE or lower. Each of the amount of the functional group-containing ETFE and the compound (A) to be dissolved by the solvent is more preferably respectively at least 5 mass%, most preferably respectively at least 10 mass%.

The melting point of the fluorinated aromatic compound as the solvent is preferably at most 230°C, more preferably at most 200°C, further preferably at most 180°C. When the melting point is within this range, the handling efficiency at the time of dissolving ETFE is excellent. Further, the fluorine content in the fluorinated aromatic compound ((fluorine atomic weight × number of fluorine atoms in the molecule) × 1 00/molecular weight) is preferably from 5 to 75 mass%, more preferably from 9 to 75 mass%, most preferably from 12 to 75 mass%. Within this range, the solubility of ETFE is excellent.

The fluorinated aromatic compound as the solvent may, for example, be specifically a fluorinated benzonitrile, a fluorinated benzoic acid and its ester, a fluorinated polycyclic aromatic compound, a fluorinated nitrobenzene, a fluorinated phenyl alkyl alcohol, a fluorinated phenyl and its ester, a fluorinated aromatic ketone, a fluorinated aromatic ether, a fluorinated aromatic sulfonyl compound, a fluorinated pyridine compound, a fluorinated aromatic carbonate, a perfluoroalkyl-substituted benzene, perfluorobenzene, a polyfluoroalkyl ester of benzoic acid, a polyfluoroalkyl ester of phthalic acid, or an aryl ester of trifluoromethane sulfonic acid. The above-described fluorinated aromatic compound is preferably a compound having at least two fluorine atoms. The fluorinated aromatic compound may be used alone or in combination as a mixture of two or more of them.

The furthermore preferred examples of the fluorinated aromatic compound may, for example, be pentafluorobenzonitrile, 2,3,4,5-tetrafluorobenzonitrile, 2,3,5,6-tetrafluorobenzonitrile, 2,4,5-trifluorobenzonitrile, 2,4,6-trifluorobenzonitrile, 3,4,5-trifluorobenzonitrile, 2,3-difluorobenzonitrile, 2,4-difluorobenzonitrile, 2,5-difluorobenzonitrile, 2,6-difluorobenzonitrile, 3,4-difluorobenzonitrile, 3,5-difluorobenzonitrile, 4-fluorobenzonitrile, 3,5-bis(trifluoromethyl)benzonitrile, 2-(trifluoromethyl)benzonitrile, 3-(trifluoromethyl)benzonitrile, 4-(trifluoromethyl)benzonitrile, 2-(trifluoromethoxy)benzonitrile, 3-(trifluoromethoxy)benzonitrile, 4-(trifluoromethoxy)benzonitrile, (3-cyanophenyl)sulfur pentafluoride, (4-cyanophenyl)sulfur pentafluoride, pentafluorobenzoic acid, ethyl pentafluorobenzoate, methyl 2,4-difluorobenzoate, methyl 3-(trifluoromethyl)benzoate, methyl 4-(trifluoromethyl)benzoate, methyl 3,5-bis(trifluoromethyl)benzoate, perfluorobiphenyl, perfluoronaphthalene, perfluoronitrobenzene, 2,4-difluoronitrobenzene, (3-nitrophenyl)sulfur pentafluoride, pentafluorobenzyl alcohol, 1-(pentafluorophenyl) ethanol, pentafluorophenyl acetate, pentafluorophenyl propanoate, pentafluorophenyl butanoate, pentafluorophenyl pentanoate, perfluorobenzophenone, 2,3,4,5,6-pentafluorobenzophenone, 2',3',4',5',6'-pentafluoroacetophenone, 3',5'-bis(trifluoromethyl)acetophenone, 3'-(trifluoromethyl)acetophenone, 2,2,2-trifluoroacetophenone, pentafluoroanisole, 3,5-bis(trifluoromethyl)anisole, decafluorodiphenyl ether, 4-bromo-2,2',3,3',4',5,5',6,6'-nonafluorodiphenyl ether, pentafluorophenylsulfonyl chloride, pentafluoropyridine, 3-cyano-2,5,6-trifluoropyridine, bis(pentafluorophenyl) carbonate, benzotrifluoride, 4-chlorobenzotrifluoride, 1,3-bis(trifluoromethyl)benzene, hexafluorobenzene, 2,2,2-trifluoroethyl benzoate, 2,2,3,3-tetrafluoropropyl benzoate, 2,2,3,3,3-pentafluoropropyl benzoate, 3,3,4,4,5,5,6,6,7,7,8,8,8-tridecafluorooctyl benzoate, bis(2,2,2-trifluoroethyl) phthalate and 4-acetylphenyl trifluoromethane sulfonate.

The melting point of the aliphatic compound having at least one carbonyl group as the solvent is preferably at most 220°C, more preferably at most 50°C, most preferably at most 20°C. Further, the boiling point of the aliphatic compound having at least one carbonyl group is preferably the same as or higher than the temperature at which the above-described ETFE is dissolved.

However, in the present invention, in a case where dissolution of the functional group-containing ETFE is carried out under autogenous pressure or below, an aliphatic compound having at least one carbonyl group and having a boiling point of less than the dissolution temperature is also applicable. The "autogenous pressure" means a pressure at which a mixture of the solvent and the functional group-containing ETFE spontaneously shows in a closed vessel. In a case where an aliphatic compound having at least one carbonyl group and having a lower boiling point is used, the autogenous pressure tends to be high, and therefore from viewpoints of safety and convenience, the boiling point of the aliphatic compound having at least one carbonyl group is preferably at least room temperature, more preferably at least 50°C, most preferably at least 80°C. Further, the upper limit of the boiling point of the aliphatic compound having at least one carbonyl group is not particularly limited, but is preferably at most 220°C from the viewpoint of drying properties, etc., when it is used for e.g. a thin film formation by coating.

The aliphatic compound having at least one carbonyl group is preferably at least one member selected from the group consisting of a ketone such as a C₃₋₁₀ cyclic ketone or a chain ketone, an ester such as a chain ester or a monoester of a glycol, and a carbonate. The number of carbonyl group(s) is preferably 1 or 2. Further, it is needless to say that an aliphatic compound having at least one carbonyl group cannot be used as the solvent in a case where the compound (A) having a reactive functional group contains a functional group which reacts with a carbonyl group.

The molecular structure of the aliphatic compound having at least one carbonyl group is not particularly limited. For example, its carbon state may be linear, branched or cyclic, and an etheric oxygen may be present between a carbon-carbon bond constituting its main chain or its side chain, and some of hydrogen atoms bonded to carbon atoms may be substituted by a halogen atom such as a fluorine atom. Among them, a cyclic ketone is more preferred as the above-mentioned aliphatic compound having at least one carbonyl group. They may be used alone or in combination as a mixture of two or more of them.

As specific and more preferred examples of the above-described aliphatic compound having at least one carbonyl group in the present invention, the following compounds may be mentioned.

The above-described cyclic ketone may be cyclopentanone, cyclohexanone, 2-methylcyclohexanone, 3-methylcyclohexanone, 4-ethylcyclohexanone, 2,6-dimethylcyclohexanone, 3,3,5-trimethylcyclohexanone, 4-tert-butylcyclohexanone, cyclopentanone or isophorone.

The above-described chain ketone may be acetone, methyl ethyl ketone, 2-pentanone, methyl isopropyl ketone, 2-hexanone, methyl isobutyl ketone, 2-heptanone, 2-octanone, 2-nonanone, diisobutyl ketone or 2-decanone.

The above-described chain ester may be ethyl formate, isopentyl formate, methyl acetate, ethyl acetate, butyl acetate, isobutyl acetate, pentyl acetate, isopentyl acetate, hexyl acetate, cyclohexyl acetate, 2-ethylhexyl acetate, ethyl butyrate, butyl butyrate, pentyl butyrate, bis(2,2,2-trifluoroethyl)adipate, methyl cyclohexanecarboxylate, 2,2,2-trifluoroethyl cyclohexanecarboxylate or ethyl perfluoropentanoate.

The above-described monoester of a glycol may be 2-methoxyethyl acetate, 2-ethoxyethyl acetate, 2-butoxyethyl acetate, 1-methoxy-2-acetoxypropane, 1-ethoxy-2-acetoxypropane, 3-methoxybutyl acetate or 3-methoxy-3-methylbutyl acetate.

The above-described carbonate may be bis(2,2,3,3-tetrafluoropropyl)carbonate, bis(2,2,2-trifluoroethyl)carbonate, diethyl carbonate or propylene carbonate.

The hydrofluoroalkyl ether which can dissolve the ETFE having a carbonyl group may, for example, be specifically 1,1,1,2,3,3-hexafluoro-4-(1,1,2,3,3,3-hexafluoropropoxy)pentane or 1,1,1,2,2,3,4,5,5,5-decafluoro-3-methoxy-4-(trifluoromethyl)pentane. Among them, 1,1,1,2,3,3-hexafluoro-4-(1,1,2,3,3,3-hexafluoropropoxy)pentane is preferred.

The above-described solvents which can dissolve the functional group-containing ETFE may be used alone or in combination as a mixture of two or more of them.

In the present application, a solvent which does not dissolve nor swell the functional group-containing ETFE up to the melting point of the functional group-containing ETFE or the boiling point of the solvent is defined as a non-solvent. In the production process of the present invention, a non-solvent may be contained in a solution of the functional group-containing ETFE within a range not to impair the solubility of the functional group-containing ETFE. Here, the lower limit of the temperature for preparing a mixed solution of the functional group-containing ETFE in the dissolution step is the phase separation temperature of the mixed solution at a certain concentration. As described below, a mixture containing at least two types of compounds, the functional group-containing ETFE and the solvent in this application, is separated into two phases at a temperature of the phase separation temperature or lower, whereby it does not form a homogeneous solution state. That is, preparation of such a solution is only possible at a temperature of the phase separation temperature or higher. Further, the temperature of the obtainable functional group-containing ETFE solution may be the melting point or higher, but is preferably at most the melting point considering deterioration of the functional group-containing ETFE or evaporation of the solvent, more preferably a temperature of the phase separation temperature of the mixed solution of the functional group-containing ETFE or higher.

In the present invention, the reactive functional group of the compound (A) may be various reactive functional groups.

For example, in a case where the functional group of the functional group-containing ETFE is a carbonyl group, a functional group such as a hydroxy group, an amino group, a mercapto group, an isocyanate group or an epoxy group may be mentioned.

In a case where the functional group of the functional group-containing ETFE is a hydroxy group, a functional group such as a carbonyl group, a hydroxy group, a sulfonyl group, an isocyanate group, a cyano group, a halogeno group, a vinyl group, an epoxy group or a silyl group may be mentioned.

In the case where the functional group of the functional group-containing ETFE is an amino group, a functional group such as a carbonyl group, a sulfonyl group, an isocyanate group, a halogeno group or an epoxy group may be mentioned.

In a case where the functional group of the functional group-containing ETFE is a mercapto group, a functional group such as a carbonyl group, an isocyanate group, a halogeno group or an epoxy group may be mentioned.

In a case where the functional group of the functional group-containing ETFE is a sulfonyl group, a functional group such as a hydroxy group or an amino group may be mentioned.

In a case where the functional group of the functional group-containing ETFE is an isocyanate group, a functional group such as a carbonyl group, a hydroxy group, an amino group, a mercapto group or an epoxy group may be mentioned.

In a case where the functional group of the functional group-containing ETFE is a cyano group, a functional group such as a hydroxy group may be mentioned.

In a case where the functional group of the functional group-containing ETFE is a halogeno group, a functional group such as a hydroxy group, an amino group or a mercapto group may be mentioned.

In a case where the functional group of the functional group-containing ETFE is a vinyl group, a functional group such as a hydroxy group, a mercapto group or a vinyl group may be mentioned.

In a case where the functional group of the functional group-containing ETFE is an epoxy group, a functional group such as a carbonyl group, a hydroxy group, an amino group, a mercapto group or an isocyanate group may be mentioned.

In a case where the functional group of the functional group-containing ETFE is a silyl group, a functional group such as a hydroxy group may be mentioned.

The number of the reactive functional group in the compound (A) may be 1 or at least 2. In the present invention, the reactive functional group in the compound (A) is preferably a functional group such as a hydroxy group, an amino group, a mercapto group, an isocyanate group or an epoxy group, more preferably a hydroxy group or an amino group, most preferably an amino group.

The compound (A) having one functional group which can react with a carbonyl group is a compound represented by R-X. Here, X is a hydroxy group, an amino group, a mercapto group, an isocyanate group or an epoxy group, and R is -H, an alkyl group (it may be linear, branched or circular), or an alkyl group (it may be linear, branched or circular) having one or more of at least one type of a functional group selected from the group consisting of a sulfonyl group, a nitro group, a halogeno group, a cyano group, a vinyl group, a silyl group, an aromatic group, a phosphoric acid ester group, a peroxy group and an azo group. However, one in which R and X are likely to react each other is not included, since reaction may proceed in its molecule or between the compounds (A). It may specifically be methanol, ethanol, hexanol, octanol, dodecanol, sodium hydroxymethane sulfinate, nitroethanol, 4-hydoxypropionitrile, 2-ethoxyethanol, hydroxyacetonitrile, 2-bromoethanol, N,N-dimethylaminoethanol, 2-(trimethoxysilyl)ethanol, phenol, benzyl alcohol, 4-hydroxypyridine, allyl alcohol, ammonia, methylamine, ethylamine, hexylamine, octylamine, dodecylamine, 3-aminopropionitrile, methoxyethylamine, 4-aminomorpholine, 2-bromoethylamine, N,N-dimethylethylenediamine, trimethoxysilylmethylamine, aniline, 4-aminopyridine, allylamine, ethylmercaptan, hexylmercaptan, octylmercaptan, dodecylmercaptan, 2-mercaptoethane sulfonic acid, 3-mercapto-1-propane sulfonic acid, N,N-dimethyl-2-aminoethanethiol, benzenethiol, benzylmercaptan, allylmercaptan, ethyl isocyanate, propyl isocyanate, benzyl isocyanate, trichloromethyl isocyanate, 2-chloroethyl isocyanate or the like.

In a case where the compound (A) has at least two reactive functional groups which can react with the carbonyl group of the ETFE, the ETFE is likely to undergo crosslinking reaction, whereby modification of the ETFE using such a reaction may become a useful crosslinking reaction.

As specific examples of the compound (A), ethylene diamine, 1,3-diaminopropane, 1,4-diaminobutane, 1,5-diaminopentane, 1,6-diaminohexane, 1,4-cyclohexyl diamine, 1,4-phenylene diamine, p-xylylene diamine, 1,2-bis(2-aminoethoxy)ethane, tris(2-aminoethyl)amine, tris(3-aminopropyl)amine, ethylene glycol, 1,3-propanediol, 1,6-hexadiol, diethylene glycol, hydroquinone, 1,4-benzenedimethanol, 1,2,4-butanetriol, 1,3,5-cyclohexanetriol, meso-erythritol, 3,6-dioxa-1,8-octanedithiol, 1,2-ethanedithiol, 1,3-propanedithiol, 1,4-butanethiol, 1,5-pentadithiol, 1,6-hexadithiol, 1,4-bis(mercaptomethyl)benzene, bis(2-mercaptoethyl)sulfide, 2-aminoethanol, N-(3-aminopropyl)diethanolamine, 1,3-diamino-2-propanol, N,N,N',N'-tetrakis(2-hydroxyethyl)ethylenediamine, 2-(2-aminoethoxy)ethanol, DL-arabitol, 3-amino-1,2-propanediol, 2-amino-1,3-propanediol, α-thioglycerol, 2,3-dimercapto-1-propanol, 1,5-hexadiene diepoxide and hexamethylene diisocyanate may, for example, be mentioned.

In the present invention, as the compound (A) having a reactive functional group, in a case where the reactive functional group is a carbonyl group, succinic acid, methyl cyano acetate, methyl 2-bromoacetate, 3-butenoic acid, n-octanoic acid, methyl nitroacetate, methyl phenylacetate or methyl diethylphosphonoacetate may, for example, be mentioned.

In a case where the reactive functional group is a hydroxy group, 3-aminopropionitrile, n-octanol, 2-nitroethanol, 2-phenylethyl alcohol or dimethyl 2-hydroxyethyl phosphonate may, for example, be mentioned.

In a case where the reactive functional group is an amino group, 3-aminopropionitrile, allylamine hydrochloride, 3-aminopropyl trimethoxysilane, n-octylamine or 2-phenylethylamine may, for example, be mentioned.

In a case where the reactive functional group is a mercapto group, sodium 2-mercaptoethane sulfonate, (3-mercaptopropyl)trimethoxysilane, 1-octanethiol or 2-phenylethanethiol may, for example, be mentioned.

In a case where the reactive functional group is a sulfonyl group, sodium 2-mercaptoethene sulfonate, 2-bromoethanesulfonyl chloride, sodium allyl sulfonate, 1-butanesulfonyl chloride or benzenesulfonyl chloride may, for example, be mentioned.

In a case where the reactive functional group is an isocyanate group, hexamethylene diisocyanate, 2-bromoethyl isocyanate, 3-(triethoxysilyl)propyl isocyanate, propyl isocyanate or benzyl isocyanate may, for example, be mentioned.

In a case where the reactive functional group is a cyano group, methyl cyanoacetate, 3-aminopropionitrile, butane dinitrile, 4-bromobutylnitrile, allyl cyanide, propionitrile, 4-biphenyl acetonitrile or dimethyl cyanomethylphosphonate may, for example, be mentioned.

In a case where the reactive functional group is a halogeno group, sodium 2-bromoethanesulfonate, 2-bromoethyl isocyanate, 4-bromobutyronitrile, dibromopropane, allyl bromide, epibromohydrine, 3-bromopropyltrimethoxysilane, 1-bromooctane, 2-bromoethylbenzene or dimethyl 2-bromoethylphosphonate may, for example, be mentioned.

In a case where the reactive functional group is a vinyl group, allylamine hydrochloride, allyl mercaptan, sodium allyl sulfonate, allyl cyanide, allyl bromide, 1,5-hexadiene, 1,2-epoxy-5-hexene, allyl trimethoxysilane, 1-octene, allylbenzene or diethyl allyl phosphonate may, for example, be mentioned.

In a case where the reactive functional group is an epoxy group, epibromohydrine, 1,2-epoxy-5-hexene, benzylglycidyl ether, 3-glycidyloxypropyl trimethoxysilane, 1,2-epoxyoctane or styrene oxide may, for example, be mentioned.

In a case where the reactive functional group is a silyl group, 3-aminopropyl trimethoxysilane, (3-mercaptopropyl)trimethoxysilane, 3-(triethoxysilyl)propyl isocyanate, trichloro-2-cyanoethylsilane, 3-bromopropyl trimethoxysilane, 3-glycidyloxypropyl trimethoxysilane, hexyl trimethoxysilane or benzyl triethoxysilane may, for example, be mentioned.

According to the reaction method of the present invention, the functional group contained in the functional group-containing ETFE can be converted to various functional groups which are different from those originally contained. When the type of the compound (A) having a reactive functional group is appropriately selected, it may be converted to various functional groups such as a carbonyl group, a hydroxy group, an amino group, a mercapto group, a sulfonyl group, an isocyanate group, a cyano group, a halogeno group, a vinyl group, an epoxy group, a silyl group, an alkyl group, a nitro group, an aromatic group, a phosphino group, a phosphoric acid ester group, a peroxy group or an azo group.

For example, the carbonyl group of an ETFE having a carbonyl group may be converted to a functional group such as a hydroxy group, a mercapto group, a sulfonyl group, a cyano group, a halogeno group, a vinyl group, a silyl group, an alkyl group, a nitro group, an aromatic group, a phosphoric acid ester group, a peroxy group or an azo group, by reacting it with the above-described compounds (A).

In the present invention, the functional group-containing ETFE and the compound (A) may be reacted to convert the functional group of the ETFE into other functional groups. Further, thus obtained ETFE having such other functional groups and a compound (A) having a reactive functional group which can react with such other functional groups may be further reacted, by the reaction method of the present invention, to convert them into another functional groups. It is also possible to obtain an ETFE having a desired functional group by repeating the reaction method of the present invention sequentially to convert the original functional group sequentially.

The ratio for mixing the functional group-containing ETFE and the compound (A) having a reactive functional group is, by the ratio of the content of the reactive functional group in the compound (A) having the reactive functional group to the content of the functional group contained in the functional group-containing ETFE, preferably form 0.1 to 100 times (equivalent ratio), more preferably from 0.3 to 10 times (equivalent ratio), most preferably from 0.5 to 2 times (equivalent ratio).

When the equivalent ratio of the content of each functional group is lower than 1 time, the functional group of the ETFE remains even if the total amount of the compound (A) reacts therewith, whereby it is possible to express a function such as an adhesive property to other members by the residual functional groups. If the amount of the compound (A) to be reacted with the functional group is small, functions to be imparted to the ETFE via its modification are not likely to be expressed. On the other hand, if the amount of the compound (A) is large, the reaction proceeds fast and the reaction time becomes short, but it is required to remove the compound (A) excessively remained after the reaction from the ETFE.

The temperature for reacting the functional group-containing ETFE and the compound (A) may be a temperature at which the functional group-containing ETFE dissolves. If the reaction temperature is too high, a special installation is required, or its operational risk increases, whereby a temperature as low as possible is desirable. Specifically, the reaction temperature is preferably at most 230°C, more preferably at most 200°C, further preferably at most 180°C. The lower limit of the reaction temperature is not particularly limited so long as it is a temperature at which reaction proceeds, but is preferably at least 40°C, more preferably at least 60°C, further preferably at least 80°C.

The functional group-containing ETFE and the compound (A) may be reacted under atmospheric pressure or a pressurized condition (1 atm or higher). The solvent which can dissolve the functional group-containing ETFE at a temperature of its boiling point or lower under atmospheric pressure may be used for reacting under atmospheric pressure, and the solvent which does not dissolve the functional group-containing ETFE at a temperature of its boiling point or lower under atmospheric pressure may be used for reacting under a pressurized condition.

The reaction time of the functional group-containing ETFE and the compound (A) may optionally be selected based on types of the functional group of the functional group-containing ETFE and the compound (A) to be reacted, but usually, if it is too short, the reaction does not proceed, whereby the functional group of the functional group-containing ETFE cannot be reacted efficiently. If it is too long, the unreacted compound (A) reacts with parts of the functional group-containing ETFE other than the functional group, and then the functional group-containing ETFE may be deteriorated due to formation of a double bond in the main chain of the functional group-containing ETFE or disconnection of the molecular chain, such being undesirable. The reaction time is preferably from 1 minute to 24 hours, more preferably from 5 minutes to 12 hours, most preferably from 10 minutes to 6 hours.

The content of the functional group-containing ETFE in the functional group-containing ETFE solution to be reacted with the compound (A) is preferably at least 0.1 mass%, more preferably at least 1 mass%, most preferably at least 5 mass%, per 100 parts by mass of the solvent. If the content of the functional group-containing ETFE in the functional group-containing ETFE solution is too low, the collision frequency between the functional group and the compound (A) becomes low and the reaction rate decreases, whereby a response of increasing the reaction time, raising the reaction temperature or the like becomes necessary.

On the other hand, the upper limit of content of the functional group ETFE in the functional group-containing ETFE solution is preferably 80 mass% per 100 parts by mass of the solvent. If the content of the functional group-containing ETFE in the functional group-containing ETFE solution is too high, its viscosity becomes too high, whereby its handling may become difficult.

As the method for reacting a functional group-containing ETFE and a compound (A) in the presence of a solvent in a dissolved state, (1) a method wherein the functional group-containing ETFE is dissolved in the solvent at a high temperature (under atmospheric pressure or a pressurized condition) to obtain a solution, followed by cooling it to a temperature at which some of the functional group-containing ETFE precipitates, and filtering the precipitated ETFE to prepare a solution in which the unprecipitated functional group-containing ETFE is dissolved at room temperature. Then, the compound (A) is introduced thereto, followed by heating as the case requires, to react the functional group-containing ETFE and the compound (A); or (2) a method wherein the compound (A) is introduced into a solution in which the functional group-containing ETFE is dissolved in the solvent at a high temperature (under atmospheric pressure or a pressurized condition), thereby to react the functional group-containing ETFE and the compound (A) may, for example, be mentioned.

The method of collecting the modified ETFE obtained by reacting the functional group-containing ETFE and the compound (A) (hereinafter referred to as the modified ETFE) from the solvent may, for example, be phase separation, reprecipitation or desolvation.

Here, the modified ETFE is an ETFE in which the bonding to the compound (A) is formed.

The phase separation is a method of obtaining a desirable polymer wherein the solution in which the modified ETFE is dissolved in a high concentration at a high temperature is cooled, thereby to precipitate the modified ETFE by means of solubility differences depending upon the temperature.

The reprecipitation is a method of obtaining a desirable polymer wherein the solution in which the modified ETFE is dissolved is introduced into a large amount of a poor solvent which does not dissolve the modified ETFE to decrease the solubility, thereby to precipitate the modified ETFE.

The desolvation is a method of obtaining a desirable polymer wherein the solvent of the solution in which the modified ETFE is dissolved is removed under a high temperature or reduced pressure condition. Further, the solution in which the modified ETFE is dissolved may be used as it is, without removing the solvent.

The process for producing a functional group-containing ETFE of the present invention is not particularly limited, and it is possible to employ a method wherein TFE, E, and a functional group-containing monomer (such as an acid anhydride monomer), and another monomer as the case requires, are introduced into a reactor, and then copolymerized by means of a radical polymerization initiator and chain transfer agent which are commonly employed. The polymerization method may be, as per se known, bulk polymerization; solution polymerization using, as a polymerization medium, an organic solvent such as a fluorinated hydrocarbon, a chlorinated hydrocarbon, a fluoro-chlorinated hydrocarbon, an alcohol or a hydrocarbon; suspension polymerization using an aqueous medium as a polymerization medium and, if necessary a suitable organic solvent; and emulsion polymerization using an aqueous medium as a polymerization medium and an emulsifier. However, most preferred is a solution polymerization.

The above-described polymerization can be carried out in a batch system or continuous system operation by using a single vessel- or multi vessel-type stirring-type polymerization apparatus, a tubular polymerization apparatus or the like.

The radical polymerization initiator is preferably an initiator having a half-life of 10 hours at a temperature of from 0 to 100°C, more preferably at a temperature of from 20 to 90°C. It may, for example, be an azo compound such as azobisisobutyronitrile; a peroxydicarbonate such as diisopropyl peroxydicarbonate, a peroxy ester such as t-butyl peroxypivalate, t-butyl peroxyisobutyrate or t-butyl peroxyacetate; a non-fluorinated diacyl peroxide such as isobutyryl peroxide, octanoyl peroxide, benzoyl peroxide or lauroyl peroxide; a fluorinated diacyl peroxide such as (Z (CF₂)pCOO)₂ (wherein Z is a hydrogen atom, a fluorine atom or a chlorine atom, and p is an integer of from 1 to 10); or an inorganic peroxide such as potassium persulfate, sodium persulfate or ammonium persulfate.

The polymerization medium is at least one member selected from the group consisting of an organic solvent such as a fluorinated hydrocarbon, a chlorinated hydrocarbon, a fluoro-chlorinated hydrocarbon, an alcohol or a hydrocarbon as mentioned above, and an aqueous medium. The chain transfer agent may, for example, be an alcohol such as methanol or ethanol; a chlorofluorohydrocarbon such as 1,3-dichloro-1,1,2,2,3-pentafluoropropane or 1,1-dichloro-1-fluoroethane; or a hydrocarbon such as pentane, hexane or cyclohexane.

The polymerization conditions are not particularly limited, but the polymerization temperature is usually preferably from 0 to 100°C, more preferably from 20 to 90°C. Further, the polymerization pressure is preferably from 0.1 to 10 MPa, more preferably from 0.5 to 3 MPa. The polymerization time may vary depending upon the polymerization temperature, the polymerization pressure, etc. but it is usually preferably from 1 to 30 hours, more preferably from 2 to 10 hours.

### EXAMPLES

Now, the present invention will be described with reference to Examples. However, it should be understood that the present invention is by no means limited to such specific Examples. Further, the value Q described in Examples and Comparative Examples represent the amount of a molten fluorinated copolymer (mm³/sec) extruded from a nozzle having a diameter of 2.1 mm and a length of 8 mm under a pressure of 0.7 MPa at 297°C, measured by using a Koka-type flow tester (manufactured by Shimadzu Corporation). The value Q is an index of the molecular weight, and the lower the value, the higher the molecular weight.

The reaction of the functional group-containing ETFE and the compound (A) was analyzed by measuring loss of the carbonyl group of the functional group contained in ETFE or changes in the absorption wavelength by means of a microscopic Fourier transform infrared spectrophotometer (microscopic FT-IR) (Micro-20, manufactured by JASCO Corporation).

The melting point and the 10% weight loss temperature were measured by DSC (differential scanning calorimetery) method and Tg-DTA (thermogravimetry-differential thermal analysis) method, respectively.

### [Preparation Example 1] (Preparation of ETFE-1 having an acid anhydride residue)

(1) A polymerization reactor equipped with a stirrer and having an internal capacity of 1.3 liters, was deaerated, and 671.1 g of 1-hydrotridecafluorohexane, 167.8 g of 1,3-dichloro-1,1,2,2,3-pentafluoropropane (AK225cb, manufactured by Asahi Glass Company, Limited, hereinafter referred to as "AK225cb") and 3.33 g of CH₂=CH(CF₂)₄ were charged; 352 g of hexafluoropropylene (HFP), 110.5 g of TFE and 3.5 g of E were injected; the interior of the polymerization reactor was heated to 66°C; and 6.7 mL of a 5 mass% 1-hydrotridecafluorohexane solution of tert-butyl peroxypivalate was charged as the polymerization initiator to initiate the polymerization. A monomer mixed gas having a composition of TFE/E=54/46 (molar ratio) was continuously charged, so that the pressure was kept constant during the polymerization, and CH₂=CH(CF₂)₄ and itaconic anhydride were continuously charged so as to be 1.0 mol% and 0.25 mol%, respectively. After 3.6 hours from the initiation of the polymerization, and at the time when 70 g of the monomer mixed gas was charged, the temperature in the interior of the polymerization reactor was lowered to room temperature, and at the same time, purging was carried out to atmospheric pressure to obtain ETFE-1 in a slurry state.
(2) The obtained ETFE-1 in a slurry state was filtrated under reduced pressure with a glass filter, and the separated ETFE-1 was dried at 120°C for 15 hours to obtain 78 g of ETFE-1.

The melting point and the Q value of the ETFE-1 were 189.1 °C and 11.6 mm³/s, respectively. The copolymerization composition was such that the repeating units derived from TFE/repeating units derived from E/repeating units derived from HFP/repeating units derived from CH₂=CH(CF₂)₄/repeating units derived from itaconic anhydride=47.0/43.2/8.3/1.2/0.3 (mol%). The content of a carbonyl group in the ETFE-1 was 81 equivalents/10⁶ g.

### [Example 1]

15.0 g of the above-described ETFE-1 having repeating units derived from itaconic anhydride and 1 g of n-dodecylamine were mixed in 230 g of 1,3-bis(trifluoromethyl)benzene (melting point: -35°C, boiling point: 131°C, fluorine content: 53 mass%, hereinafter referred to as "solvent 1 "), and heated, followed by stirring at 120°C in an egg-plant type flask connected with a reflux tube. In the middle of the stirring, ETFE-1 and n-dodecylamine were dissolved in the solvent 1, and then a highly viscous transparent solution was obtained. Three hours later, reprecipitation was carried out at 0°C in 800 mL of hexane, thereby to obtain a white transparent solid. Then, the solid was dried for 15 hours at 150°C by an oven, thereby to obtain 13.6 g of a pale brown solid. The carbonyl absorption of the obtained pale brown solid was analyzed by means of the microscopic FT-IR, and as a result, it was found that the carbonyl absorption of itaconic anhydride (1,780 cm⁻¹) was almost disappeared and the carbonyl absorption of an imide bond (1,710 cm⁻¹) was appeared. Further, the alkyl absorptions (2,850 cm⁻¹ and 2,900 cm⁻¹: derived from a -CH₃ group, and a -CH₂-group) were appeared. Accordingly, it was confirmed that the amino group of n-dodecyl amine and the carbonyl group of itaconic anhydride of ETFE-1 were reacted, whereby an imide bond was formed to modify ETFE-1 with n-dodecylamine (ETFE-2). Further, the melting point of the ETFE-2 modified with n-dodecylamine was found to be 191.5°C, and the 10% weight loss temperature measured by Tg-DTA was found to be 435.5°C (ETFE-1: 379.3°C).

### [Example 2]

An experiment was carried out in the same manner as in Example 1 except that n-dodecylamine was changed to 1.01 g of cyclohexylamine, whereby 10.7 g of a brown solid was obtained. In the middle of the experiment, ETFE-1 and cyclohexylamine were dissolved in the solvent 1, whereby a highly viscous transparent solution was obtained. The carbonyl absorption of the obtained brown solid was analyzed by means of the microscopic FT-IR in the same manner as in Example 1, whereby it was found that the carbonyl absorption of itaconic anhydride (1,780 cm⁻¹) was almost disappeared and the carbonyl absorption of an imide bond (1,710 cm⁻¹) was appeared. Accordingly, it was confirmed that the amino group of cyclohexylamine and the carbonyl group of itaconic anhydride of ETFE-1 were reacted, whereby an imide bond was formed to modify ETFE-1 with cyclohexylamine (ETFE-3).

The melting point of ETFE-3 modified with cyclohexylamine was found to be 191.7°C, and the 10% weight loss temperature measured by Tg-DTA was found to be 404.2°C.

### [Example 3]

An experiment was carried out in the same manner as in Example 1 except that n-dodecylamine was changed to 1.08 g of 2-aminoethanol, whereby 12.1 g of a brown solid was obtained. In the middle of the experiment, ETFE-1 and 2-aminoethanol were dissolved in the solvent 1, whereby a highly viscous transparent solution was obtained. The carbonyl absorption of the obtained brown solid was analyzed by means of microscopic FT-IR in the same manner as in Example 1, whereby it was found that the carbonyl absorption of itaconic anhydride (1,780 cm⁻¹) was almost disappeared and the carbonyl absorption of an imide bond (1,710 cm⁻¹) was appeared. Further, the -OH absorption (a broad peak in the vicinity of 3,500 cm⁻¹) was appeared. Accordingly, it was confirmed that the amino group of 2-aminoethanol and the carbonyl group of itaconic anhydride of ETFE-1 were reacted, whereby an imide bond was formed to modify ETFE-1 with 2-aminoethanol (ETFE-4). The melting point of ETFE-4 modified with 2-aminoethanol was found to be 186.4°C, and the 10% weight loss temperature measured by Tg-DTA was found to be 395.1°C.

### [Example 4]

12.4 g of ETFE-1 and 1.1 g of ethylene diamine were mixed with in 230.7 g of 1,3-bis(trifluoromethyl)benzene, and heated, followed by stirring at 120°C in an egg-plant type flask connected with a reflux tube. In the middle of the stirring, ETFE-1 was dissolved in the solvent, whereby a highly viscous transparent solution was obtained. Two hours later, the interior of the egg-plant type flask was visually observed and it was confirmed that pale yellow particles having a diameter of about 5 mm were precipitated. After an additional 1 hour, reprecipitation was carried out at 0°C in 800 mL of hexane, thereby to obtain a pale yellow solid. Then, drying was carried out for 15 hours at 120°C by an oven, thereby to obtain 11.2 g of a yellow solid. Then, measurement of the Q value of the yellow solid was attempted, but it was not extruded from the flow tester, whereby its Q value was found to be unmeasurable. Since pale yellow particles were precipitated in the middle of the reaction and the Q value was unmeasurable, it was concluded that the crosslinking reaction proceeded by reacting ETFE-1 with ethylenediamine to crosslink ETFE-1 (ETFE-5).

### [Example 5]

0.97 g of ETFE-1 was mixed with 50.71 g of 1,3-bis(trifluoromethyl)benzene (melting point: -35°C, boiling point: 131°C, fluorine content: 53 mass%, "solvent 1 ") in an egg-plant type flask connected with a reflux tube, and heated while stirring to dissolve them, followed by cooling it to room temperature and filtering, thereby to obtain 42.35 g of an ETFE-1 solution in which 1.08 mass% of ETFE-1 was dissolved. To the 1.08 mass% ETFE-1 solution, 1.01 g of ethylenediamine was introduced and dissolved, followed by stirring for 2 hours at 80°C. After completion of the reaction, in 600 g of hexane at 0°C, the solution was introduced for reprecipitation. The obtained transparent solid was dried for 15 hours at 120°C to obtain 0.23 g of a white solid. All of the white solid was mixed with 1.00 g of ETFE-1, and the Q value was measured. The Q value of the mixture was found to be significantly decreased to 0.8, comparing to the Q value 11.6 of the starting material ETFE. Accordingly, the molecular weight was considered to be increased by introducing ethylenediamine to an ETFE-1 solution having itaconic anhydride, and crosslinking ETFE-1 efficiently under a relatively mild condition for 2 hours at 80°C (ETFE-6).

### [Example 6]

An experiment was carried out in the same manner as in Example 1 except that cyclohexanone (melting point: -16.4°C, boiling point: 155.7°C, hereinafter referred to as "solvent 2") was used instead of the solvent-1, whereby 13.1 g of a pale yellow solid was obtained. In the middle of the experiment, ETFE-1 was dissolved in the solvent, whereby a highly viscous transparent solution was obtained. The carbonyl absorption of the obtained pale yellow solid was analyzed by means of the microscopic FT-IR in the same manner as in Example 1, whereby it was found that the carbonyl absorption of itaconic anhydride (1,780 cm⁻¹) was almost disappeared and the carbonyl absorption of an imide bond (1,710 cm⁻¹) was appeared. Accordingly, it was confirmed that the amino group of n-dodecylamine and the carbonyl group of itaconic anhydride of ETFE-1 were reacted, whereby an imide bond was formed to modify ETFE-1 with n-dodecylamine (ETFE-7). Further, the melting point of ETFE-7 modified with n-dodecylamine was found to be 190.1°C, and the 10% weight loss temperature measured by Tg-DTA was found to be 426.7°C.

### [Comparative Example 1]

As a Comparative Example of Example 1, instead of the modification method of Example 1, n-dodecene was used as the comonomer of Preparation Example 1 to carry out the polymerization for introducing a long chain alkyl group into ETFE. As a result, it was found that the molecular weight of the produced ETFE was low and preparation of an ETFE suitable for practical use was difficult, since n-dodecene acted as a strong chain transfer agent.

### [Comparative Example 2]

As a Comparative Example of Example 3, instead of the method disclosed in Example 3, 3-buten-1-ol was used as the comonomer of Preparation Example 1 to carry out the polymerization for introducing a hydroxy group into ETFE. As a result, it was found that the molecular weight of the produced polymer was low and preparation of an ETFE suitable for practical use was difficult, since 3-buten-1-ol acted as a strong chain transfer agent. Further, due to the reactivity of 3-buten-1-ol to other monomer radicals such as ethylene and tetrafluoroethylene, it was found to be difficult to modify ETFE with a hydroxy group as intended.

### INDUSTRIAL APPLICABILITY

According to the reaction method of the present invention, it is possible to impart functions different from those of a conventional ETFE. It has been difficult to change properties of ETFE by modification with other compounds, due to its properties such as a high melting point and high chemical resistance. Since it is possible to efficiently modify an ETFE having a functional group such as a carbonyl group under a relatively mild condition without limitation regarding selection of a compound for modification, an ETFE having a novel function can be prepared easily. The application of such a modified ETFE is, for example, preferably a water treatment application in the case of using a porous body of an ETFE having a hydrophilic group such as a hydroxy group introduced therein, or an electret material in the case of using an ETFE modified with a trialkoxysilyl group. Further, when a crosslinking reaction is carried out by using a compound (A) having at least two functional groups such as a hydroxy group, an amino group and a mercapto group, it is possible to produce a high molecular weight ETFE from a low molecular weight ETFE, whereby the heat resistance and mechanical properties of the crosslinked ETFE is improved. Such a crosslinking reaction is also useful in the case of using an ETFE solution as paints. Further, by modifying with an alkyl group, the substrate adhesion to a hydrocarbon resin such as polyethylene can be improved, and by modifying with an alkoxysilyl group, the adhesiveness to glass can be improved.

The entire disclosure of Japanese Patent Application No. 2010-094733 filed on April 16, 2010 including specification, claims, drawings and summary is incorporated herein by reference in its entirety.

## Claims

1. A method for reacting an ethylene/tetrafluoroethylene copolymer having a functional group, which comprises reacting, in the presence of a solvent which can dissolve the ethylene/tetrafluoroethylene copolymer having a functional group, the ethylene/tetrafluoroethylene copolymer having a functional group and a compound (A) having a reactive functional group which can react with the functional group, in a dissolved state.

2. The method for reacting an ethylene/tetrafluoroethylene copolymer having a functional group according to Claim 1, wherein the functional group in the ethylene/tetrafluoroethylene copolymer is a carbonyl group.

3. The method for reacting an ethylene/tetrafluoroethylene copolymer having a functional group according to Claim 1 or 2, wherein the reactive functional group in the compound (A) is at least one member selected from the group consisting of an amino group, a hydroxy group, and a mercapto group.

4. The method for reacting an ethylene/tetrafluoroethylene copolymer having a functional group according to any one of Claims 1 to 3, wherein the solvent is at least one member selected from the group consisting of a fluorinated aromatic compound, an aliphatic compound having at least one carbonyl group, and a hydrofluoroalkyl ether.

5. The method for reacting an ethylene/tetrafluoroethylene copolymer having a functional group according to any one of Claims 1 to 4, wherein the reaction is carried out at a temperature of from 40 to 230°C.

6. The method for reacting an ethylene/tetrafluoroethylene copolymer having a functional group according to any one of Claims 1 to 5, wherein the content of the ethylene/tetrafluoroethylene copolymer is from 0.1 to 80 parts by mass per 100 parts by mass of the solvent.

7. The method for reacting an ethylene/tetrafluoroethylene copolymer having a functional group according to any one of Claims 1 to 6, wherein the content of the functional group in the ethylene/tetrafluoroethylene copolymer is from 10 to 3,000 equivalents/10⁶ g.

8. The method for reacting an ethylene/tetrafluoroethylene copolymer having a functional group according to any one of Claims 2 to 7, wherein the carbonyl group in the ethylene/tetrafluoroethylene copolymer is at least one member selected from the group consisting of a carboxy group, an alkoxycarbonyl group, a halogeno-carbonyl group, a carbonate group, an acid anhydride residue, an aldehyde group, a ketone group, and an isocyanate group.

9. The method for reacting an ethylene/tetrafluoroethylene copolymer having a functional group according to any one of Claims 1 to 8, wherein the ethylene/tetrafluoroethylene copolymer contains repeating units derived from tetrafluoroethylene and repeating units derived from ethylene, and the molar ratio thereof is from 70/30 to 30/70.

10. The method for reacting an ethylene/tetrafluoroethylene copolymer having a functional group according to any one of Claims 1 to 9, wherein the compound (A) has at least two reactive functional groups.

11. The method for reacting an ethylene/tetrafluoroethylene copolymer having a functional group according to any one of Claims 1 to 9, wherein the compound (A) is at least one member selected from the group consisting of an alkylamine, a haloamine, an aromatic amine, a silylamine, an alkyl alcohol, a haloalcohol, an aromatic alcohol, a silyl alcohol, a diamine, a diol, and an amino alcohol.

12. The method for reacting an ethylene/tetrafluoroethylene copolymer having a functional group according to any one of Claims 1 to 11, wherein the ethylene/tetrafluoroethylene copolymer further contains repeating units derived from another monomer, and such another monomer is a compound represented by CH₂=CX(CF₂)ₙY (provided that each of X and Y is independently a hydrogen atom or a fluorine atom, and n is an integer of from 2 to 8), and the content of the repeating units derived from another monomer is from 0.1 to 10 mol% based on the total repeating units.

13. The method for reacting an ethylene/tetrafluoroethylene copolymer having a functional group according to any one of Claims 1 to 12, wherein the ethylene/tetrafluoroethylene copolymer further contains repeating units derived from a polymerizable compound having an unsaturated bond and an acid anhydride residue.
